# EUROPEAN PATENT APPLICATION

(11) **EP 2 124 409 A1**
(43) Date of publication of application: **25.11.2009**
(21) Application number: 08305195.3
(22) Date of filing: 23.05.2008
(51) Int. Cl.: H04L 27/26

(54) **Apparatus and method for symbol timing in ofdm systems**

(71) Applicant: Thomson Licensing, Inc., 92100 Boulogne-Billancourt (FR)
(72) Inventor: Liu, Dun, 100876, Beijing (CN); Liu, Gang, 100085, Beijing (CN); Du, Yongjiu, 100085, Beijing (CN)
(74) Representative: Ruellan-Lemonnier, Brigitte

(57) **Abstract**

A method and apparatus for symbol timing in OFDM systems is described. It includes receiving an OFDM signal transmitted by a plurality of paths; correlating the received signal to do coarse symbol timing; and determining whether the coarse symbol timing needs to be adjusted based on a feedback from FEC decoder.
It finds application by detecting (720) pre-echo paths which are folded due the periodicity property of the IFFT (714).
The echo-identifier (720) fine-tune the timing of the FFT (706) by synchronizing on the far-most resolvable path which is likely to be a pre-echo.

## Description

### FIELD OF THE INVENTION

The present invention relates generally to the reception and demodulation of multi-carrier transmission signal , and more specifically, to the symbol synchronization and demodulation of an Orthogonal Frequency Division Multiplexing (OFDM) system, such as a digital television system, B3G(Beyond-3G) system.

### BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Digital television signal systems represent the new generation of television broadcasting, employing digital processing from signal generation to signal transmission and finally to signal reception and customer display. Globally, several standards for digital television signal transmission are employed including the Advanced Televisions Systems Committee (ATSC) standard predominantly in the United States and the Digital Video Broadcast - Terrestrial (DVB-T) standard predominantly in Europe and other parts of the world. A variant of DVB-T, known as DVB-Handheld (DVB-H) is a standard for handheld application based on the DVB-T standard. Both DVB-T and DVB-H use OFDM as the modulation layer format technology.

Recently, OFDM is becoming the main and basic transmission technology, which replaced single carrier spread technology for example CDMA (Code Division Multiple Access) in the field of new broadband wireless communication system. WLAN (Wireless Local Area Network), WIMAX (Wireless Metropolitan Area Network), and MBWA (Mobile Broadband Wireless Access) adopt OFDM as basic technology. Moreover, 3GPP LTE (3 ^{rd} Generation Partnership Project-Long Time Evolution) technology uses OFDM and its updating (downlink OFDM, uplink DFT-S-OFDM) as basic multi-address technology.

In briefly, almost rising and newest technology take OFDM as core.

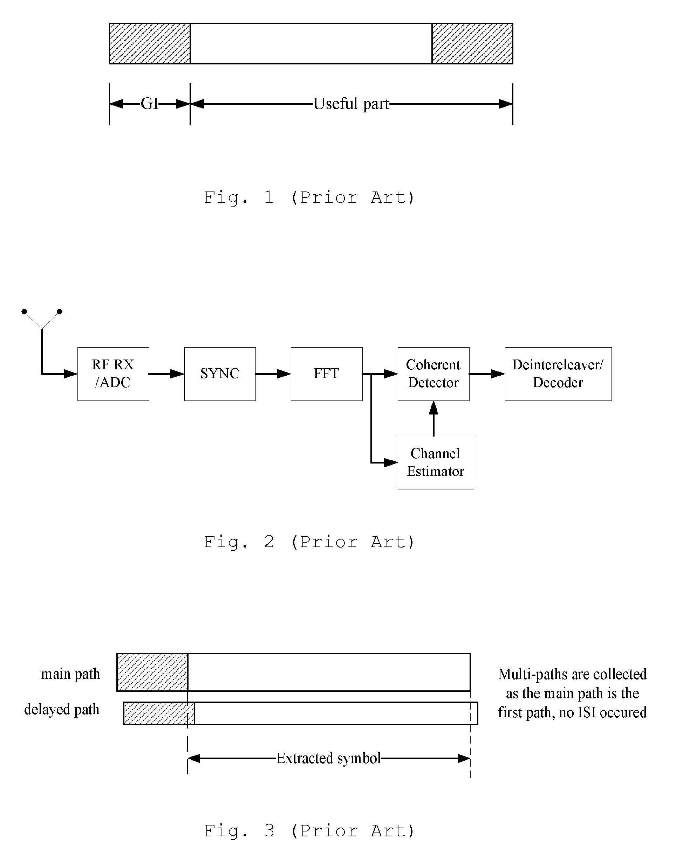

OFDM transmission system splits a high-rate at a-stream into a number of lower rate streams to be transmitted simultaneously over a number of sub-carriers. Because the symbol duration increases for the lower rate parallel sub-carriers, the relative amount of dispersion in time caused by multipath delay spread is decreased. A guard time is introduced for every OFDM symbol to eliminate inter-symbol interference (ISI) almost completely. The guard time is chosen to be larger than the expected delay spread, so the multipath components from one symbol will not interfere with the next symbol. In DVB-T/H system, the guard time for every OFDM symbol is cyclically extended, so multi-path components of data can be collected and intercarrier interference (ICI) can be voided. The symbol format with cyclic-extended guard interval (GI) is shown in Fig. 1.

A simplified block diagram of a normal OFDM receiver is shown in Fig. 2. Symbol synchronization is an important task for SYNC block in Fig. 2, and it is normally divided into two steps. First in acquisition mode, a pre-FFT coarse symbol timing is performed to extract the useful part of symbol (as shown in Fig. 1), then in tracking mode, a post-FFT fine symbol timing is used to refine the initial estimate and track the timing offset, but will not modify the coarse symbol timing position.

Since in DVB-T/H system, there is no special pre-FFT training data available, the only useful information is the cyclic-prefix guard interval. Coarse symbol timing is based on delay correlation between the cyclic prefix part (guard interval) and corresponding data. When correlation peak is detected, symbol synchronization is achieved.

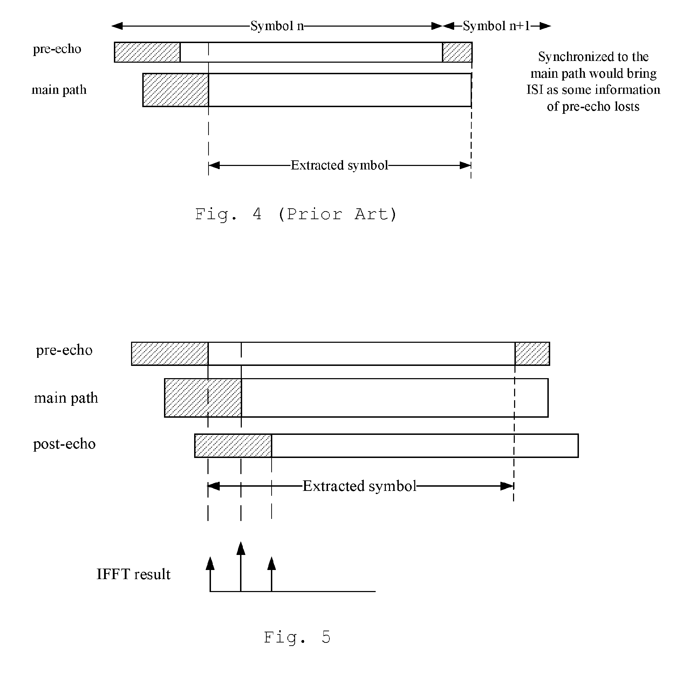

Above correlation-peak detection method for symbol synchronization works well under channels that have no large delay spread multi-path components, such as AWGN (Additive White Gaussian Noise), Rayleigh and Ricean channel, as the extracted data can collect power of most multi-paths, as shown in Fig. 3. However, the environment becomes much more hostile in Single Frequency Network (SFN) channel as the delay spreads may be very large (up to 260us at most for 8K mode according to Nordig test specification). If the main path is the first path, coarse symbol timing can still meet the requirements. But if there is a weak pre-echo before the main path, and the attenuation level is very high (-15dB or even -21dB) (see Fig. 4), correlation in coarse symbol timing may fail to detect the first path as the peak gets blurred, so the ISI problem will greatly impact the performance of demodulator.

One traditional solution to combat this channel is to set correlation threshold low enough to find the first path, but this way has some potential drawbacks. First, such low threshold may bring confusion with noise when in good channel without multi-path components and lead to false symbol timing. The false position would be in far front of the main path and deteriorate the performance. Secondly, such a weak echo may tend to vanish with the environment changes, and then the synchronization position may crash the demodulation. And third, if the delay between pre-echo and main path exceeds guard interval, even coarse symbol timing detects and synchronizes to the first path, severe ISI still affects demodulation.

To cope with the different channel requirements, it is proposed to identify the echoes in post-FFT operation, while the pre-FFT synchronization only detects the "big" path whose attenuation level is less than -3dB.

### SUMMARY OF THE INVENTION

The disclosed embodiments relate to a method and apparatus for channel estimation. According to certain aspects of the present embodiment, a method is disclosed that includes receiving an OFDM signal containing pilot sub-carriers, calculating a transmission channel response based on the pilot sub-carriers, deriving a time delay characteristic based on the transmission channel response, and selecting interpolation filter coefficients in response to the derived time delay characteristic.

According to aspects of an embodiment, a method is disclosed for symbol timing in OFDM systems is described. The method includes receiving an OFDM signal transmitted by a plurality of paths; correlating the received signal to do coarse symbol timing; and determining whether the coarse symbol timing needs to be adjusted based on a feedback from FEC decoder. In another embodiment, the feedback from FEC decoder is an error byte rate counted by a RS decoder. In further another embodiment, the step of determining includes the steps of: comparing the feedback from FEC decoder with a predefined threshold; calculating a symbol timing shift if the feedback from FEC decoder exceeds the predefined threshold; and adjusting the coarse symbol timing by the calculated symbol timing shift.

According to aspects of another embodiment, an apparatus is described including means for receiving an OFDM signal transmitted by a plurality of paths; means for correlating the received signal to do coarse symbol timing; and means for determining whether the coarse symbol timing needs to be adjusted based on a feedback from FEC decoder. In another embodiment, the feedback from FEC decoder is an error byte rate counted by a RS decoder. In further another embodiment, the means for determining includes: means for comparing the feedback from FEC decoder with a predefined threshold; means for calculating a symbol timing shift if the feedback from FEC decoder exceeds the predefined threshold; and means for adjusting the coarse symbol timing by the calculated symbol timing shift.

One aspect of the present invention is to identify channel with multi-path and long delay echoes and to achieve proper symbol timing, while the synchronization time in short-delay echo environments such as AWGN, Rayleigh and Ricean channels will not be affected. As a result, the multi-path delayed data can be collected as much as possible to improve the DVB-T/H receiver performance.

### BRIEF DESCRIPTION OF THE DRAWINGS

Fig. 1 depicts a conventional OFDM symbol with cyclic-extended guard interval;
Fig. 2 depicts a simplified block diagram of a traditional OFDM receiver;
Fig. 3 depicts how correction-peak detection method for symbol synchronization works for moderately dispersive channels with main path is the first path;
Fig. 4 depicts how a pre-echo before main path and improper symbol timing bring inter-carrier interference;
Fig. 5 depicts how IFFT result is achieved in fine symbol time;
Fig. 6 depicts how aliasing between pre-echo and post-echo in IFFT is achieved;
Fig. 7 depicts a block diagram of an example OFDM receiver architecture with intelligent echo identifier;
Fig. 8 depicts symbol comparison between the time shifting to the pre-echo and the time shifting to the first point in guard interval of main path; and
Fig. 9 depicts a flow chart of a proposed method for symbol timing according to the present invention.

The characteristics and advantages of the present invention may become more apparent from the following description, given by way of example.

### DETAILED DESCRIPTION OF PREFERRED EMBODIMENTS

One or more specific embodiments of the present disclosure will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

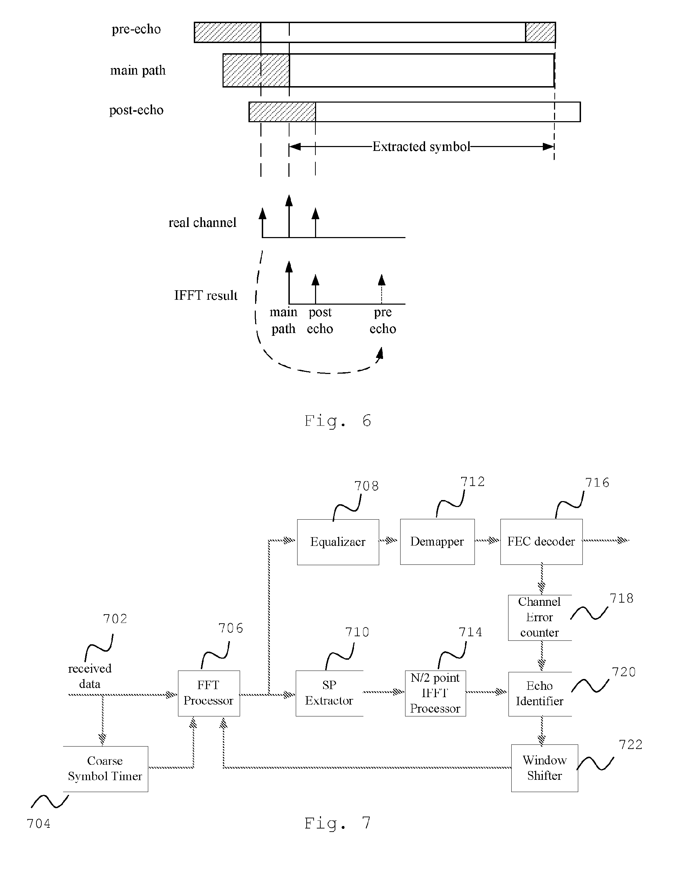

Turning now to the drawings and referring to Fig. 7, a block diagram of an intelligent echo identifier according to the present disclosure is shown. Intelligent echo identifier includes coarse symbol timer 704, fast fourier transform (FFT) processor 706, equalizer 708, scatteredpilot (SP) exactor 710, demapper 712, N/2 point IFFT processor 714, forward error correction (FEC) decoder 716, RS error counter 718, echo identifier 720, and window shifter 722. In operation, received data 702 is input to FFT processor 706 and coarse symbol timer 704. 704 estimates symbol timing coarsely by time-domain received data 702, and provides a indicator to FFT processor 706. Based on the combined timing knowledge from 704 and window shifter 722, FFT processor 706 extracts useful portion (guard interval is discarded) from input data 702, and transforms it to frequency domain. The outputs of FFT processor 706 is input to equalizer 708, which estimates channel response and performs equalization. The equalized data from 708 is input to demapper 712 to do constellation demapping. The output of 712 contains soft decision information of constellation point, and is input to FEC decoder 716 to do channel decoding and output for application use (such as video/audio decoder and player) . The decoded data from 716 is also input to a channel error counter 718 to calculate the error rate (for example, Reed-Solomon code contains byte error and packet error information after decoding and they are countable). On the other hand, the output of FFT processor 706 includes pilot sub-carriers, a pilot extractor 710 extracts them from one or more symbols and calculates the channel responses on these sub-carriers. 710 also aligns them in a normal order for output. An IFFT processor 714 performs Inverse-FFT to the input channel responses on the pilot sub-carriers from 710. As the channel responses are in frequency-domain, the IFFT processor gets the time-domain CIR (Channel Impulsive Response), or the multi-path echoes information. The different channel echoes can be clearly "listed" in 714, but the pre-echo and post-echo might be aliased. The output echo information form 714, and channel error rate information from 718, both input to the echo identifier 720, which judges the correct first-path and last-path. The decision might base on the comparison of channel error rate between timing to different paths, which causes evident error differences. It then outputs information of delays for each detected echoes to window shifter unit 722. The window shifter 722 controls how the fine timing should shift and this result is feed-back to FFT processor 706 to determine the final timing together with coarse timing result from 704.

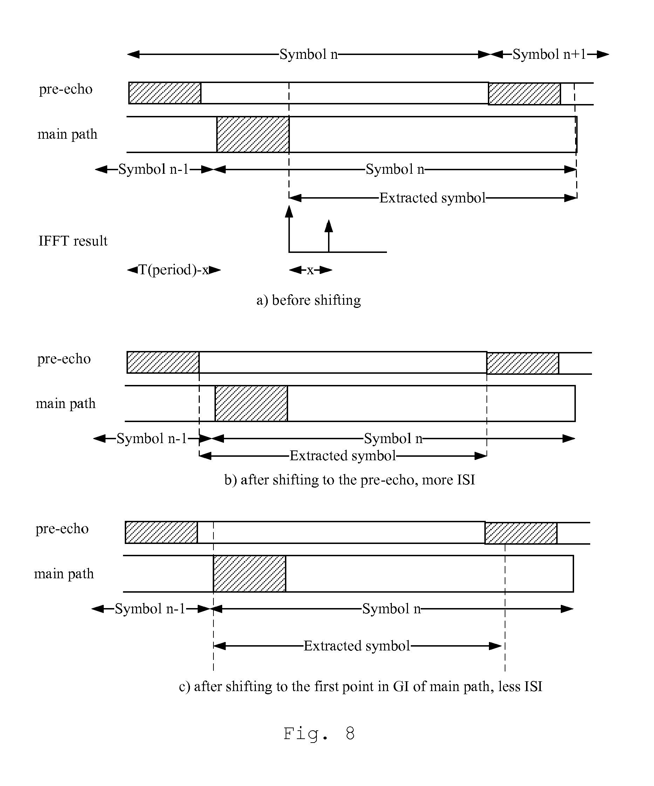

Turning now to Fig. 8, a diagram showing comparison between the time shifting to the pre-echo and the time shifting to the first point in guard interval of main path. It happens on when there exists a pre-echo and the delay between main path and the pre-echo exceeds guard interval. After coarse timing, the result be shown in a) where timing window fits to the useful part of main path. The IFFT result detects an echo existing, but may mistakes it as a post-echo due to IFFT aliasing. As severe ISI (Inter-Symbol Interference) exists for the beginning part of symbol (n+1) of pre-echo and ending part of symbol n in main path, great channel error rate arises. With the help of error counter (unit 718 in Fig.7), echo identifier (unit 720 in Fig.7) can judge the weak path should be pre-echo but not post-echo. Now from the distance of two paths in IFFT result, it can be figured out that the main path delay compared to pre-echo exceeds guard interval. Two timing method are available: the first is synchronize to the pre-echo as convention, shown in b) of Fig. 8, and the other is synchronize to the first point of guard interval in main path, shown in c) of Fig.8. The interfered data samples are the same, but in the first method, the samples are in main path; while in the second method, the interfered samples are in the pre-echo. Both methods can not avoid ISI, but the latter minimizes this problem and brings better performance. So the window shifting unit (unit 722 in Fig.7) choose the second shifting method.

Symbol timing in DVB-T/H is achieved by 3 steps. In the first step, a typical delay correlator performs coarse symbol timing to find out the main path. The coarse timing might not be proper because it doesn't try to search the first path. The main task of this step is to locate a coarse position to FFT window.

In the second step, after FFT demodulator, the channel impulse response (CIR) is estimated by applying Inverse Fast Fourier Transform (referred hereafter as IFFT) to frequency-domain responses on scatter pilots. The echoes can be clearly distinguished, but due to the periodicity property of IFFT, it might not be easy to tell whether an echo is a pre-echo or a post-echo. The main task of this step is to re-fine symbol timing position based on coarse symbol timing.

In the last step, FEC decoder (RS decoder in particular) indicates whether the symbol synchronization is reasonable, if not, the symbol timing can "jump" to the proper position by information provided by the second step. The function of step 2 and 3 can be generalized to an "echo identifier" to work iteratively till the correct position is got.

This solution may take longer time to get proper symbol timing under very complex channel environment, but it is more robust for both moderately dispersive channels and ISI channels (in particular SFN). And the hardware overhead for control is very small, little system hardware cost is required.

Suppose DVB-T system, and 2 echo channels, there is one pre-echo, main path and post-echo. The power of main path is higher than the echoes.

When power on, the time-domain received data is fed to a delay correlator to do coarse symbol timing. The main path is detected at correlation peak with its power center, then we try to search a pre-echo with acceptable attenuation level (e.g., power larger than -3dB of main path). Symbol timing will synchronize to the pre-echo if it exists otherwise to the main path. Search a pre-echo helps to collect maximum multi-path power quickly, but the threshold should not be set too low because it is prone to be polluted by noise and get false synchronization position. After coarse symbol timing, the extracted part is fed to fast-Fourier transform (FFT) block for demodulation. After that, the data is transformed from time-domain to frequency-domain, and the useful data is equalized to remove the multi-path fading effect and de-mapped then fed to FEC decoder.

On the other hand, the frequency-domain data includes scattered pilots which are uniformly inserted on specific sub-carriers. The insert location is periodic for every 4 OFDM symbols. All the scattered pilots in every 4 consecutive OFDM symbols are extracted and combined and an IFFT computation is applied to the extracted pilots to estimate the CIR. As the precision of correlation is limited, the coarse symbol timing may not accurately find the path it desired. Since the scattered pilots are transmitted at the boosted power level, and the samples are zero-padded to do *Nᵤ*=*N*/2 point IFFT (here N is the number of FFT, 2048 or 8192 for 2K and 8K mode, respectively), the resulting CIR estimation has higher resolution compared to coarse symbol timing and noise is restrained. This process is denoted as fine timing. Suppose symbol timing is correctly synchronized to the first path, the peaks in IFFT result is shown in Fig. 5.

However, IFFT computation has periodicity property, which means if coarse symbol timing doesn't detect the pre-echo (normally it happens when the power of pre-echo is relatively low), it will "fold" back to be aliased with post-echoes. This is seen in Fig. 6, as the folded pre-echo shown in dash line.

As the frequency interval for the combined pilots is 3**fᵤ*, where *fᵤ* is the sub-carrier spacing, as a result the IFFT can "see" the CIR as a periodicity of 1/(3**fᵤ*)=*Tᵤ*/3 (*Tᵤ*=1/*fᵤ*), which is about 300µs in 8K mode. So, a pre-echo with distance x to the main path, will be ambiguous with a post-echo with delay *Tᵤ*/3-*x* to main path.

IFFT calculation can "list" the echoes, but can not identify whether it is a "folded" pre-echo or a "real" post-echo. In order to achieve this goal, Reed-Solomon (RS) decoder can used to provide further information. In DVB-T/H, the Forward Error Control (FEC) coding including convolution code and RS code is used to add redundancy error protection. The RS decoder can counts the number of error bytes in each RS packet. This is an important and evident indicator for the receiver performance. One embodiment works as follows:
● Coarse symbol timing determines coarsely FFT window to one strongest path or the path which has several dB attention of the strongest path.
● Fine timing locks to one path based on step 1.
● RS decoder starts to count the error byte rate. If RS decoder finds that the byte error rate exceeds a performance threshold, a flag is feedback to fine-timing block to prepare shifting FFT window, that is, symbol timing position.
● Fine-timing block calculates the distance between synchronization path and the last resolvable path, denoted as x, according to IFFT result. This last path is considered to be a pre-echo, and a value y determining symbol timing shift is calculated and sent back. The value y depends on x and will be introduced later.
● Symbol timing (or FFT window) "pre-jump" by y on the basic of coarse symbol timing.
● After new symbol timing is stable, RS decoder re-starts to count the error byte rate.
● If the new result satisfies receiver performance requirement, the adjusting finishes. If it doesn't but the performance is better than before, then we goes back to step 4 to continue adjusting. While if the performance is worse than before, we jump back to the old symbol timing and the adjusting finishes.

If we denote the above embodiment as "intelligent echo identifier". The architecture of the mechanism is shown in Fig. 7. It works as a probing-and-verifying loop described above until the receiver finally achieves a proper symbol timing location with best performance.

Following provides detail explanation for step3 to calculate the timing shift value. Suppose x is the distance between current synchronization path and the far-most resolvable path in IFFT, *t_{period}* the IFFT period time, and *t_{GI}* the guard interval length time. For DVB-T/H *t_{period}* is *Tᵤ*/3. As the far-most resolvable path is to be recognized as pre-echo, it actually precedes the current synchronization path by (*t_{period}-x*). If (*t_{period}*-x)<*t_{GI}*, the timing shift value y is simply as (*t_{period}*-*x*). Otherwise, if the pre-echo is a weak echo, then for reducing inter-symbol interference (ISI) as much as possible, the timing shift value y should be *t_{GI}*, which means synchronize to the first point in guard interval of main path as shown in Fig. 8. As the delay between two paths is more than guard interval, ISI can not be avoided. Shifting of c) contains a integrate symbol of main path, so it can minimize the ISI loss best.

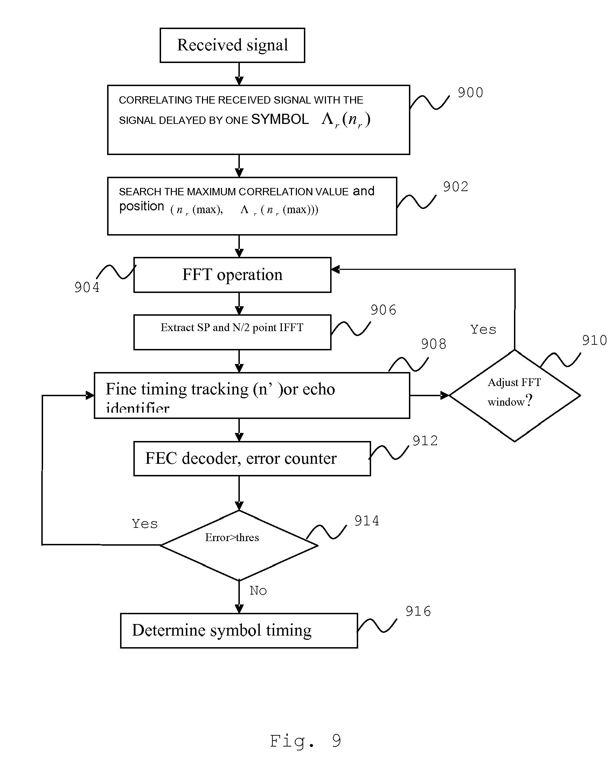

A method for symbol timing is proposed as in Fig. 9. Specifically, a signal is received and then is correlated with the signal delayed by one symbol Λ*ᵣ*(*nᵣ*) in Step 900; then, Step 902 is to search the maximum correlation value and position (*nᵣ*(max), Λ*ᵣ*(*nᵣ*(max))) ; further then, Fast Fourier Transform operation is conducted in Step 904; still further then, SP (Scatter Pilots) are extracted to perform N/2 point IFFT processing in Step 906; Echo is identified or tracking (n') is conducted by fine timing method in Step 908; yet still further then, to decide whether FFT window should be adjusted in Step 910. If yes, it returns back to FFT operation in Step 904; FEC decoding and error counting is conducted in Step 912; Step 914 checks whether the number of errors is greater than the threshold. If yes, it returns back to echo identification and fine timing tracking (n') in Step 908. Otherwise, the flow ends up by Step 916 of symbol timing determination.

The general idea of the present invention is applies to all comb-pilot assisted OFDM systems (where pilot sub-carriers are inserted uniformly in frequency domain) and it also applies to other communication systems which can estimate CIR(Channel Impulsive Responses) by the frequency-domain pilots aid. For wireless broadcasting or other communication OFDM systems, pilots sub-carriers are inserted for receiver to estimate and track the encountered channel. IFFT for the pilots can get good channel CIR when the maximum delay is not very long, however when this is true (this may happens when the adj acent transmitters are far away), IFFT ambiguity may cause false estimation, at this time, FEC decoding can provides indication for fine timing.

## Claims

1. A method for symbol timing in an Orthogonal Frequency Division Multiplexing (OFDM) receiver the method comprising the steps of:
receiving an OFDM signal transmitted by a plurality of paths;
correlating the received signal to do coarse symbol timing; and
determining whether the coarse symbol timing needs to be adjusted based on a feedback from FEC decoder.

2. The method according to claim 1, wherein the feedback from FEC decoder is an error byte rate counted by a RS decoder.

3. The method according to claim 1 or 2, wherein the step of determining includes the steps of:
comparing the feedback from FEC decoder with a predefined threshold;
calculating a symbol timing shift if the feedback from FEC decoder exceeds the predefined threshold; and
adjusting the coarse symbol timing by the calculated symbol timing shift.

4. An apparatus for symbol timing in an Orthogonal Frequency Division Multiplexing (OFDM) receiver, comprising:
means for receiving an OFDM signal transmitted by a plurality of paths;
means for correlating the received signal to do coarse symbol timing; and
means for determining whether the coarse symbol timing needs to be adjusted based on a feedback from FEC decoder.

5. The apparatus according to claim 4, wherein the feedback from FEC decoder is an error byte rate counted by a RS decoder.

6. The apparatus according to claim 4 or 5, wherein the means for determining includes:
means for comparing the feedback from FEC decoder with a predefined threshold;
means for calculating a symbol timing shift if the feedback from FEC decoder exceeds the predefined threshold; and
means for adjusting the coarse symbol timing by the calculated symbol timing shift.
